# EUROPÄISCHE PATENTSCHRIFT

(11) **EP 2 901 222 B1**
(45) Veröffentlichungstag und Bekanntmachung des Hinweises auf die Patenterteilung: **25.12.2019**
(21) Anmeldenummer: 13765326.7
(22) Anmeldetag: 12.09.2013
(51) Int. Cl.: G05B 19/409, G05B 19/042, G05B 19/418

(54) **VERFAHREN ZUR UNTERSTÜTZUNG VON BEDIEN- UND UMSTELLPROZESSEN**
METHOD FOR SUPPORTING OPERATING AND CHANGEOVER PROCESSES
PROCÉDÉ DESTINÉ À SOUTENIR DES PROCESSUS DE SERVICE ET DE CONVERSION

(30) Priorität: 27.09.2012 DE 102012217570
(43) Veröffentlichungstag der Anmeldung: 05.08.2015
(73) Patentinhaber: Krones AG, 93073 Neutraubling (DE)
(72) Erfinder: HAHN, Wolfgang, 93073 Neutraubling (DE); KELLHAMMER, Thomas, 93073 Neutraubling (DE); ZÖLFL, Markus, 93073 Neutraubling (DE); PRONOLD, Timo, 93073 Neutraubling (DE); BÖHM, Johannes, 93073 Neutraubling (DE); TRAUB, Christina, 93073 Neutraubling (DE); SCHMIDT, Stefan, 93073 Neutraubling (DE)
(74) Vertreter: Grünecker Patent- und Rechtsanwälte PartG mbB
(86) Internationale Anmeldenummer: PCT/EP2013/068869
(87) Internationale Veröffentlichungsnummer: WO 2014/048759

(56) Entgegenhaltungen:
- EP-A1- 2 306 254
- EP-A2- 2 407 842
- WO-A1-2007/066166
- DE-A1-102006 051 533
- DE-A1-102009 012 832
- US-A1- 2010 064 235

## Beschreibung

Die Erfindung betrifft ein Verfahren und eine Vorrichtung zur Unterstützung von Bedien- und/oder Umstellprozessen, insbesondere Sortenumstellungen in der getränkeverarbeitenden Industrie.

### Stand der Technik

Aus dem Stand der Technik sind Vorrichtungen und Verfahren im Hinblick auf die Erkennung und Bearbeitung von Störungen bekannt.

So offenbart beispielsweise die DE 10 2008 010076 A1 eine Anlage zum Ver- und/oder Bearbeiten von Packmittel, wobei über eine zentrale Steuereinheit in Form eines Rechners unterschiedliche Packmittelformate gespeichert sind, mit denen die Anlage zum Ver- und/oder Bearbeiten von Packmitteln entsprechend angesteuert werden kann, so dass die für die entsprechenden Packmittelformate gespeicherten Sollwerte umgesetzt werden.

Die DE 10 2010 013884 A1 beschreibt eine mobile Kontroll- und Organisationseinheit zur Überwachung von Maschinen und mindestens einer Schnittstelle zum Herstellen einer Verbindung zum Übertragen von Daten und/oder Messsignalen zwischen der Kontroll- und Organisationseinheit und mindestens einer Maschine. Dabei gestattet es die Kontroll- und Organisationseinheit beim Auftreten einer mit der Maschine assoziierten Störung eine nach definierten Ausfallkriterien zu bestimmende Person aus dem Umkreis der Maschine in geeigneter Weise zu informieren.

Die EP 2 306 254 A1 offenbart eine mobile Eingabevorrichtung zur Bedienung einer Maschine, z.B. einer Blasformmaschine, auf der Informationen zur Bedienung der Maschine angezeigt werden können.

### Aufgabe

Der Erfindung liegt daher die Aufgabe zugrunde, ein Verfahren und eine Vorrichtung zur Unterstützung von Bedien- und/oder Umstellprozessen bereitzustellen.

### Lösung

Diese Aufgabe wird erfindungsgemäß durch das Verfahren und die Vorrichtung zur Unterstützung von Bedien- und/oder Umstellprozessen, insbesondere Sortenumstellungen in der getränkeverarbeitenden Industrie nach Anspruch 1 bzw. Anspruch 5 gelöst. Die Unteransprüche beinhalten bevorzugte Ausführungsformen der Erfindung. Ausführungsformen, die hier beschrieben werden, und die nicht durch die Ansprüche abgedeckt sind, dienen dem besseren Verständnis der Erfindung.

Das Verfahren zur Unterstützung von Bedien- und/oder Umstellprozessen umfasst daher das Anlegen einer Beschreibung des Bedien- und/oder Umstellprozesses, der eine Vielzahl von Teilschritten umfassen kann, das Bearbeiten einzelner Teilschritte und Speichern des Bedien- und/oder Umstellprozesses und/oder der bearbeiteten Teilschritte. Durch dieses Verfahren kann der Bedien- und/oder Umstellprozess einer beliebigen Maschine für jeden Bediener in kleinen Teilschritten erklärt werden, was es einem eventuell unerfahrenen bzw. üblicherweise mit anderen Maschinen arbeitenden Bediener ermöglicht, einen Umstellprozess bzw. einen oder mehrere der Teilschritte des Bedien- und/oder Umstellprozesses gezielt durchzuführen.

In einer Ausführungsform wird wenigstens einer der Schritte Anlegen, Bearbeiten oder Speichern wenigstens teilweise mit Hilfe eines mobilen Geräts durchgeführt. Die Nutzung eines solchen mobilen Geräts zum Erstellen eines entsprechenden Bedien- und/oder Umstellprozesses gestattet eine Vor-Ort-Analyse und Sofort-vor-Ort Dokumentation mittels des mobilen Geräts der nötigen Schritte, die zum erfolgreichen Durchführen des Bedien- und/oder Umstellprozesses erforderlich sind. So können einzelne Etappen von Teilschritten bzw. des ganzen Umstellprozesses beispielsweise direkt an den entsprechenden Stellen der Maschine bzw. der Anlage erstellt werden.

In einer weiteren Ausführungsform ist das Verfahren dadurch gekennzeichnet, dass aus einer Reihe von Presets, die bereits voreingestellten Bedien- und/oder Umstellprozessen und/oder voreingestellten Teilschritten entsprechen oder diese umfassen und die bevorzugt in einer Datenbank gespeichert sind, ein oder mehrere Bedien- und/oder Umstellprozesse und/oder Teilschritte ausgewählt wird. Durch das Zurverfügungstellen von voreingestellten Bedien- und/oder Umstellprozessen bzw. Teilschritten kann das Erzeugen eines neuen Bedien- und/oder Umstellprozesses erleichtert werden, indem auf die voreingestellten Bedien- und/oder Umstellprozesse oder Teilschritte aus dem Preset zugegriffen wird. Vorteilhaft ist die Möglichkeit, die voreingestellten Presets weiter zu bearbeiten, beispielsweise um maschinenspezifische Details zu ergänzen.

In einer Ausführungsform umfasst der Schritt "Anlegen" das Erstellen eines digitalen Bildes und/oder Videos des Ortes/der Maschine, an dem oder an der der Bedien- und/oder Umstellprozess und/oder der Teilschritt durchgeführt wird, sowie das Erstellen eines digitalen Bildes und/oder Videos des Handlungsablaufs des Bedien- und/oder Umstellprozesses und/oder des Teilschrittes und des Weiteren Erstellen einer Erstellanleitung des Bedien- und/oder Umstellprozesses und/oder eines Teilschrittes sowie Speicherung von Zusatzdaten, beispielsweise aktuelle und vorherige, verwendete Produktsorten und des Abspeicherns in einer Datenbank. Das Versehen des Bedien- und/oder Umstellprozesses und/oder der Teilschritte mit entsprechenden Bildern oder Videos vom Ort bzw. Handlungsablauf des Bedien- und/oder Umstellprozesses und/oder des Teilschrittes sowie das Einfügen von Erstellanleitungen und das Abspeichern von Zusatzdaten kann den Umgang eines Bedieners mit den Maschinen während des Umstellprozesses erheblich erleichtern.

In einer Ausführungsform ist das Verfahren dadurch gekennzeichnet, dass der Schritt "Bearbeiten" weiterhin das Verwalten des Bedien- und/oder Umstellprozesses und/oder der Teilschritte und die Definition des Orts des Bedien- und/oder Umstellprozesses und/oder des Teilschritts mit Hilfe von an der umzustellenden Maschine vorgesehenen Codierungen, sowie das Erzeugen von Workflows für Benutzer und das Verteilen einzelner Workflows und/oder einzelner Teilschritte und/oder des Bedien- und/oder Umstellprozesses auf Endgeräte umfasst. Das Erzeugen einzelner Workflows, insbesondere für bestimmte Benutzer, erlaubt eine effektive Koordination eines gesamten Bedien- und/oder Umstellprozesses, was den Zeitaufwand, insbesondere bei Bedien- und/oder Umstellprozessen dies eine Vielzahl von Teilschritten umfassen, erheblich verringern kann.

In einer weiteren Ausführungsform wird das Verfahren dadurch gekennzeichnet, dass der Umstellprozess und/oder die Teilschritte in vorgegebene Standardmasken eingegeben werden. Das erleichtert das Erstellen von neuen Bedien- und/oder Umstellprozessen bzw. Teilschritten, da ein Bediener so wenigstens auf eine standardisierte Grundstruktur zurückgreifen kann.

Unter Verwendung dieses Verfahren lässt sich eine Vorrichtung zur Unterstützung von Bedien- und/oder Umstellprozessen, insbesondere Sortenumstellungen in der getränkeverarbeitenden Industrie, bereitstellen, die wenigstens eine Eingabeeinrichtung umfasst, mit der eine Beschreibung des Bedien- und/oder Umstellprozesses, der eine Vielzahl von Teilschritten umfassen kann, erstellt werden und mit der einzelne Teilschritte bearbeitet werden können und die weiterhin eine Datenspeichervorrichtung umfasst, in der der Bedien- und/oder Umstellprozess und/oder die Teilschritte gespeichert werden können. Diese Vorrichtung erlaubt es, insbesondere durch die vorgesehene Eingabeeinrichtung, einen Bediener durch ein entsprechendes Interface Bedien- und/oder Umstellprozesse inklusive der eventuell vorgesehenen Teilschritte zu generieren. Durch das Vorsehen einer Datenspeichervorrichtung wird weiterhin gewährleistet, dass auch zu einem späteren Zeitpunkt auf die erstellten Bedien- und/oder Umstellprozesse und/oder Teilschritte zugegriffen werden kann.

In einer Ausführungsform ist die Vorrichtung dadurch gekennzeichnet, dass die Eingabeeinrichtung ein mobiles Gerät umfasst oder ein mobiles Gerät ist. Mit Hilfe eines mobilen Endgerätes ist es möglich, beispielsweise Fotos oder Videos an den konkreten Orten, an denen der Bedien- und/oder Umstellprozess und/oder der Teilschritt stattfindet oder an dem von einem Bediener Schritte durchgeführt werden müssen, aufzunehmen. Ferner kann das Erstellen der Bedien- und/oder Umstellprozesse oder Teilschritte erleichtert werden, da ein Bediener die Beschreibung direkt an der Maschine vornehmen kann und somit die örtlichen Gegebenheiten mit in die Beschreibung aufnehmen kann.

In einer weiteren Ausführungsform ist ein Preset-Speicher vorgesehen, der mit der Datenspeichervorrichtung identisch sein kann, in dem Preset-Einstellungen für Bedien- und/oder Umstellprozesse und/oder Teilschritte gespeichert sein können. Durch Zugriff auf diese Preset-Speicher wird es einem Bediener ermöglicht, auf bereits bekannte und voreingestellte Bedien- und/oder Umstellprozesse und/oder Teilschritte zurückzugreifen und somit das Erstellen eines neuen Bedien- und/oder Umstellprozesses in kürzerer Zeit zu bewerkstelligen bzw. wenn von einer baugleichen Maschine ein bereits bekannter Bedien- und/oder Umstellprozess erstellt werden soll, auf den hinterlegten zurückzugreifen.

In einer Ausführungsform ist die Vorrichtung dadurch gekennzeichnet, dass die Eingabeeinrichtung geeignet ist, digitale Bilder und/oder Videos zu erzeugen, Erstellanleitungen des Bedien- und/oder Umstellprozesses und/oder des Teilschritts zu erzeugen und ferner dadurch gekennzeichnet, dass die Eingabeeinrichtung und die Datenspeichervorrichtung geeignet sind, Zusatzdaten beispielsweise aktuelle und vorherige verwendete Produktsorten zu speichern. So ist es möglich, eine detailreiche und korrekte Beschreibung des Bedien- und/oder Umstellprozesses und/oder eines Teilschritts zu erstellen, die es auch anderen Bedienern ermöglicht, den Bedien- und/oder Umstellprozess durchzuführen.

In einer Ausführungsform sind die Eingabeeinrichtung und die Datenspeichervorrichtung geeignet, den Bedien- und/oder Umstellprozess und/oder Teilschritte zu verwalten. Eine Definition des Ortes des Bedien- und/oder Umstellprozesses und/oder des Teilschritts mit Hilfe von an der umzustellenden Maschine vorgesehenen Codierungen zu erzeugen, Workflows für Benutzer zu erzeugen und einzelne Workflows und/oder einzelne Teilschritte und/oder die Bedien- und/oder Umstellprozesse auf alle Geräte zu verteilen. Damit wird eine möglichst zeitsparende und effektive Einteilung der nötigen Arbeiten für einen Bedien- und/oder Umstellprozess gewährleistet, was Stillstandzeiten von Maschinen minimieren kann.

In einer Ausführungsform ist die Vorrichtung dadurch gekennzeichnet, dass die Eingabeeinrichtung und die Datenspeichervorrichtung geeignet sind, Standardmasken bereitzustellen, in die der Bedien- und/oder Umstellprozess und/oder die Teilschritte eingearbeitet werden können.

Das Bereitstellen einer Standardmaske ermöglicht auf der einen Seite ein vereinfachtes Erstellen von Bedien- und/oder Umstellprozessen und/oder Teilschritten und gewährleistet auf der anderen Seite eine einheitliche Darstellung der Bedien- und/oder Umstellprozesse.

### Kurze Beschreibung der Figuren

- Fig. 1: Fließschema eines Umstellprozesses;
- Fig. 2: detailliertes Fließschema des Anlegens des Umstellprozesses und Bearbeiten des Umstellprozesses bzw. Teilschritts;
- Fig. 3: schematische Darstellung einer erfindungsgemäßen Vorrichtung;
- Fig. 4: schematische Darstellung mehrerer erfindungsgemäßer Vorrichtungen mit verteilten Workflows.

### Ausführliche Figurenbeschreibung

Es sei darauf hingewiesen, dass die hier beschriebenen Vorrichtungen und Verfahren nicht nur auf die unten beschriebenen Umstellprozesse angewendet, sondern auch zur Unterstützung von Bedienprozessen (Wartungs- und Instandhaltungsprozesse oder Störungsbeseitigung, Ver- und Entsorgung von Verbrauchsmaterialien, etc.) eingesetzt werden können. Beispielsweise werden verstärkt Bediener einer Maschine mit Aufgaben zur vorbeugenden Instandhaltung eingesetzt, für die anlagenspezifische Anleitungen erstellt und aktualisiert werden müssen. Ferner können die beschriebenen Vorrichtungen und Verfahren auch für das Neu-Anlegen von Verfahrensschritten für beispielsweise neue Produktserien (neue Sorten etc.) verwendet werden können. Daher ist, sofern für die Erfindung relevante Merkmale in Bezug auf einen Umstellprozess beschrieben werden, in gleicher Weise ein Bedienprozess oder das Neu-Anlegen von Verfahrensschritten für beispielsweise neue Produktserien gemeint.

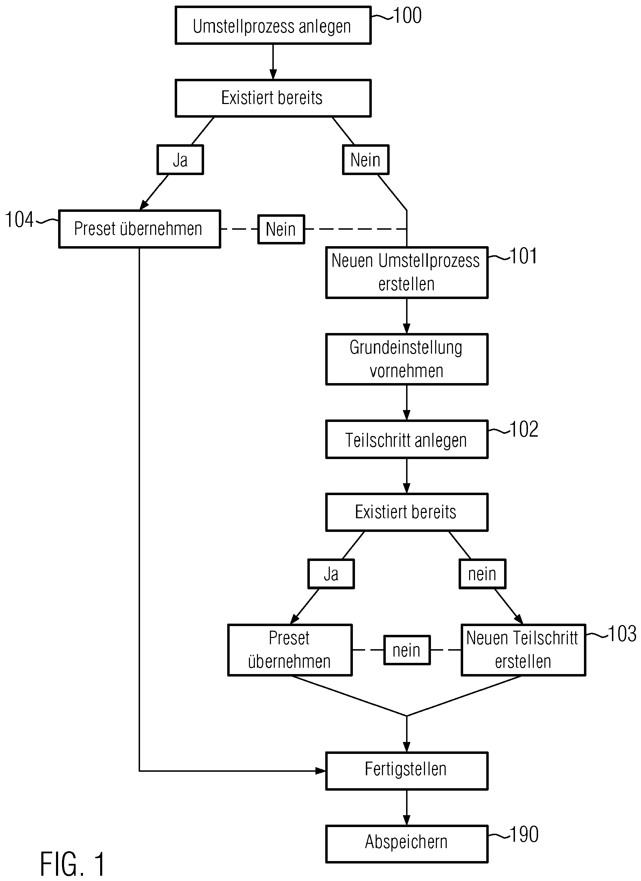

Fig. 1 zeigt eine schematische Darstellung für das Anlegen eines Umstellprozesses 100. Bevor ein Umstellprozess neu generiert wird, kann durch ein entsprechendes Programm eine Abfrage erfolgen, ob der neue Umstellprozess 100 bereits existiert. Das kann beispielsweise durch eine Reihe von an den Bediener gerichteter Fragen oder eine Stichwortsuche des Bedieners in einer Datenbank erfolgen.

Wird erkannt, dass dieser Umstellprozess bereits existiert, so kann aus einer Reihe von, vorzugsweise in einer Datenbank hinterlegten Presets der entsprechende Umstellprozess ausgewählt und übernommen werden 104. Der entsprechende Prozess kann dann als neuer Umstellprozess 100 fertig gestellt und abgespeichert werden 190. Existiert ein entsprechender Umstellprozess 100 noch nicht unter den Presets oder werden Änderungen gewünscht, so kann ein neuer Umstellprozess 101 erstellt werden. Für diesen können zunächst einige Grundeinstellungen festgelegt werden, beispielsweise Bezeichnungen, und dann einer bzw. eine Vielzahl von Teilschritten 102 festgelegt werden.

Auch hier existiert vorteilhaft ein Speicher, in dem Presets für entsprechende Teilschritte angelegt sind. Es wird überprüft, ob für einen entsprechenden Teilschritt bereits ein Preset existiert. Das kann beispielsweise durch eine Reihe von an den Bediener gerichteter Fragen oder eine Stichwortsuche des Bedieners in der Datenbank erfolgen. Ist dies der Fall, kann das entsprechende Preset übernommen werden und der Teilschritt kann fertig gestellt und abgespeichert werden 190. Existiert der entsprechende Teilschritt noch nicht oder sind Modifikationen notwendig, beispielsweise weil der Umstellprozess an der entsprechenden Maschine durch einzigartige bauliche Gegebenheiten anders erfolgt als üblich, kann ein neuer Teilschritt erstellt werden 103. Sind so sukzessive alle Teilschritte erstellt worden und mit den nötigen Informationen versehen, kann der gesamte Umstellprozess 100 fertig gestellt und abgespeichert werden 190.

Es sei hier darauf hingewiesen, dass es grundsätzlich möglich ist, die oben beschriebenen Schritte nicht nur auf die Umstellung einer Anlage, sondern auch für einen Umstellprozess, der das Umstellen einer Vielzahl von Maschinen erfordert, anzuwenden. Darunter fallen beispielsweise die Umstellung einer Produktion auf Kombinations- oder Kreuzbetrieb.

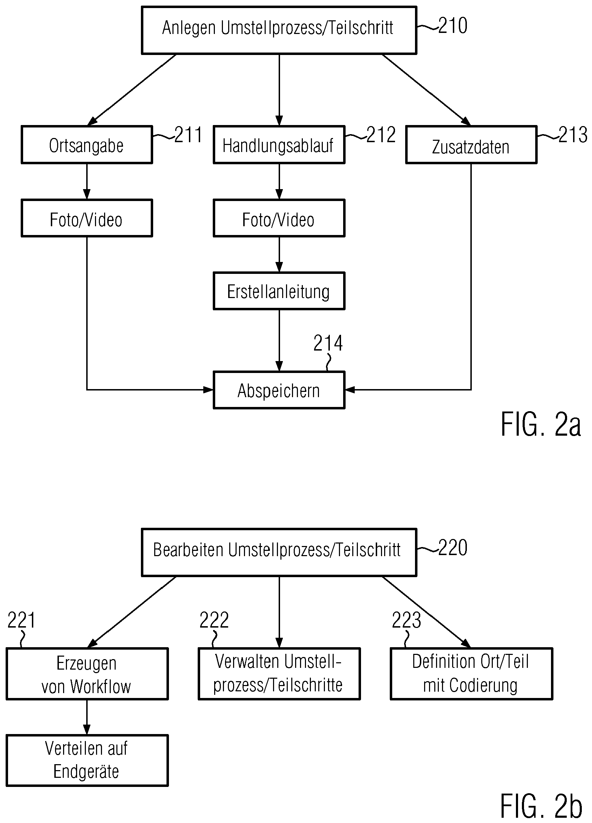

Fig. 2 zeigt eine detailliertere Fließschemadarstellung für das Anlegen und das Bearbeiten eines Umstellprozesses bzw. Teilschritts.

In Fig. 2A ist das Anlegen eines Umstellprozesses bzw. Teilschritts dargestellt. Dabei umfasst das Anlegen 210 insbesondere das Aufnehmen von Ortsangaben 211 für den Umstellprozess bzw. Teilschritt. So kann die Ortsangabe insbesondere möglichst detaillierte Angaben über den Ort der Maschine in der Werkshalle oder über eine bestimmte Position, an der der Umstellprozess stattfinden muss, enthalten. Ferner können beim Anlegen des Umstellprozesses oder Teilschritts Fotos bzw. Videos von dem Ort aufgenommen werden, um einem dritten Bediener zu ermöglichen, auch ohne Anweisungen des den Umstellprozess bzw. Teilschritts erstellenden Bedieners selbigen auszuführen.

Ferner kann das Anlegen des Umstellprozesses oder Teilschritts 210 eine umfassende Beschreibung des Handlungsablaufs 212 umfassen, in der beispielsweise stichpunktartig oder auch in Form von kompletten Texten oder schematischen Abbildungen die durchzuführenden einzelnen Schritte beispielsweise Handgriffe beschrieben werden. Gleichzeitig können dazu auch Fotos oder Videos angezeigt werden, die mit einem entsprechenden mobilen Endgerät aufgenommen oder, wenn es sich um standardisierte Vorgänge handelt, aus einer Datenbank entnommen werden können. Gleichzeitig können dazu auch Fotos oder Videos bereitgestellt werden, die mit einem entsprechenden mobilen Endgerät aufgenommen wurden. Ebenfalls kann in dem erstellten Handlungsablauf eine entsprechende Erstellanleitung für den gesamten Umstellprozess oder Teilschritt vorgesehen sein. Diese umfasst neben dem detaillierten Ausführungen zu einzelnen Teilschritten beispielsweise auch Übergänge von einzelnen Teilschritten oder bestimmte Informationen über Reihenfolgen und gegebenenfalls Bedingungen für die Durchführung einzelner Teilschritte. Bedingungen für die Durchführung einzelner Teilschritte können z. B. Abhängigkeiten von vorherigen Teilschritten sein. Als Beispiel könnte in einem zweiten Teilschritt das Lösen eines Steckers vorgesehen sein, der unter einer Abdeckung liegt. Der erste Teilschritt umfasst dabei das Lösen dieser Abdeckung so dass der Stecker frei liegt. Die Bedingung für die Durchführung des zweiten Teilschritts ist daher die Durchführung des ersten Teilschritts, so dass der Stecker freiliegt.

Weiterhin können Zusatzdaten vorgesehen sein, die die genauen Umstände des Umstellprozesses bzw. Teilschritts definieren. So kann ein bestimmter Umstellprozess beispielsweise nur dann sinnvoll durchgeführt werden, wenn eine Umstellung von Produkt A auf Produkt B und nicht auf Produkt C stattfinden soll. Als Beispiel dient die Umrüstung von in der getränkeverarbeitenden Industrie üblicherweise verwendeten Blasformmaschinen. So kann es vorgesehen sein, dass eine Umstellung der Blasformen von 1-Liter-Flaschen sowohl auf 1,5-Liter-Flaschen als auch auf 0,75-Liter-Flaschen möglich ist. Als Zusatzdaten für den entsprechenden Umstellprozess oder Teilschritte davon, könnte dann eine Information vorgesehen werden, die wiedergibt, dass der entsprechende Umstellprozess entweder für die Umstellung der Produktionsreihe auf 0,75-Liter-Flaschen geeignet ist oder eine andere Information kann wiedergeben, dass der entsprechende Umstellprozess nur für eine Umrüstung der Blasformmaschine auf 1,5-Liter-Flaschen von 1-Liter-Flaschen geeignet ist. Die so erstellte detaillierte Beschreibung des angelegten Umstellprozesses oder Teilschritts kann dann abgespeichert werden.

Fig. 2B ist eine schematische Darstellung der Bearbeitung eines bereits gespeicherten Umstellprozesses oder Teilschritts 220. Aus entsprechendem Umstellprozess oder Teilschritt können einzelne Workflow für Benutzer definiert werden 221. Diese Workflows können auf einzelne Endgeräte verteilt werden, die bestimmten Bedienern zugewiesen sein kann. Die Workflows umfassen dabei eine Reihe von Teilschritten, die für einen bestimmten Bediener vorbereitet wurden. Sie können Aufgaben für speziell ausgebildete Bediener umfassen und insbesondere durch ein entsprechendes Zeitmanagement der einzelnen Teilschritte eine Minimierung der gesamten Stillstandszeit der Anlage gewährleisten.

Das wird erreicht, indem unterschiedlichen Bedienern Teilschritte so zugewiesen werden, dass möglichst keine Überschneidungen stattfinden, das bedeutet, keiner der Bediener auf die Beendigung eines Teilschritts eines anderen Bedieners warten muss und gleichzeitig der Arbeitsaufwand jedes einzelnen Bedieners möglichst minimiert wird. Des Weiteren kann eine Verwaltung 222 des Umstellprozesses oder der Teilschritte erfolgen. Diese Verwaltung kann das Überwachen der Durchführung der einzelnen Teilschritte gewährleisten und so den Zeitpunkt der Fertigstellung bzw. Beginn eines Teilschritts erfassen und an die Gruppe der Bediener verteilen, so dass auf eventuelle Verzögerungen reagiert werden kann. Darüber hinaus ist es möglich, die Teilschritte mit noch genaueren Ortsangaben oder beispielsweise genauen Werkstückangaben zu versehen, die mit Hilfe von an den einzelnen Werkstücken oder entsprechenden Orten der Maschine vorgesehenen Codierungen spezifiziert werden. Dadurch kann gleichzeitig eine Überprüfung der Fortschritte des Umstellprozesses bzw. einzelner Teilschritte gewährleisten werden.

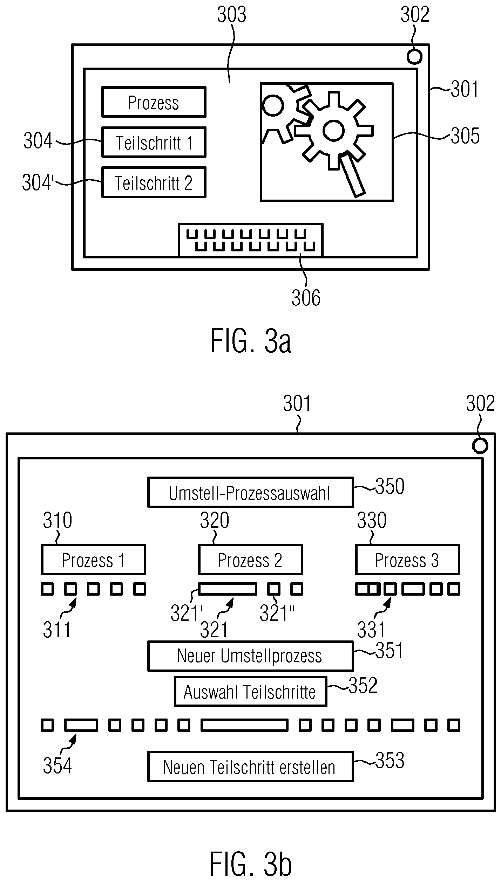

Fig. 3 zeigt eine schematische Darstellung eines Geräts, das bei der Durchführung des erfindungsgemäßen Verfahrens benutzt werden kann. Die Vorrichtung 301 kann dabei beispielsweise in Form eines Tablet-PCs, oder anderer mobiler Endgeräte, wie gängigen Smartphones oder auch Laptops ausgebildet sein. Besonders vorteilhaft ist die Ausbildung des Tablet-PCs gemäß eines Touchpads, das eine interaktive Bedienfläche aufweist. Das Endgerät 301 umfasst besonders bevorzugt eine Darstellungsoberfläche 303 und eine Kamera 302, die zur Aufnahme sowohl digitaler Bilder als auch Videos geeignet ist. Es ist weiterhin bevorzugt, dass das Endgerät 301 nicht nur über einen internen Speicher verfügt, der beispielsweise die oben beschriebenen Presets umfassen kann, sondern weiterhin Mittel zur drahtlosen Datenübertragung umfasst, um beispielsweise mit anderen Endgeräten oder einer zentralen Verarbeitungseinheit oder einem zentralen Speicher zu kommunizieren.

In der Oberfläche 303 kann dann, wie in Fig. 3A dargestellt, ein entsprechender Prozess mit den notwendigen Teilschritten 304 und 304' dargestellt werden. Bevorzugt sind die in der Abbildung 3A dargestellten Symbole interaktiv, d. h., dass durch einen Klick auf die entsprechenden Symbole 304, 304' zusätzliche Informationen angezeigt werden können. Gleichzeitig kann vorgesehen sein, dass bei der Übersicht des Gesamtprozesses eine schematische Darstellung 305 oder die entsprechende Aufnahme der Vorrichtung oder Teile der Vorrichtung dargestellt werden. Wird ein bestimmter Teilschritt ausgewählt, kann zusätzlich oder als Ersatz für dieses Bild 305 eine Darstellung von für den entsprechenden Teilschritt relevanten Informationen oder Bildern erfolgen. Für das Erstellen und das Bearbeiten des Umstellprozesses ist es vorteilhaft, wenn die Bedienoberfläche 303 des Endgeräts 301 ebenfalls eine Tastatur 306 umfasst, die entsprechende Eingaben für die einzelnen Prozesse oder Teilschritte ermöglicht. So kann eine individuelle Abstimmung jedes Umstellprozesses und/oder Teilschritts an äußere Gegebenheiten erfolgen.

Fig. 3B zeigt eine mögliche Realisierung der bereits erwähnten Preset-Einstellungen für Umstellprozesse und/oder Teilschritte. Wurde von dem Programm bzw. dem Bediener erkannt, dass für den gesuchten Umstellprozess in dem Datenspeicher entsprechende Prozesse gespeichert sind, so kann er durch eine entsprechende Umstellprozessauswahl 350 zu einer Auswahl von möglichen Prozessen 310, 320 und 330 gelangen. Besonders bevorzugt ist, wenn für einen beliebigen zu erstellenden Umstellprozess hinterlegte Umstellprozesse 310, 320, 330 beliebig kombiniert werden können, was insbesondere auch für die enthaltenen Teilschritte gelten kann. Durch entsprechende Berührung oder Eingaben in das Endgerät 301 kann einer oder mehrere der Umstellprozesse 310, 320 und 330 gewählt werden. Besonders bevorzugt ist es, wenn die zu den Umstellprozessen 310, 320 und 330 gehörigen Teilschritte 311, 321 und 331 angezeigt werden. Weiterhin ist von Vorteil, wenn auch unter diesen Teilschritten ausgewählt werden kann.

Dabei kann zur vereinfachten Bedienung vorgesehen sein, dass die einzelnen Teilschritte durch unterschiedliche Färbungen bzw. Größen der Symbole charakterisiert sind. So findet sich beispielsweise in der Gruppe der Teilschritte 321 des Umstellprozesses 320 ein Teilschritt 321', dessen Symbolgröße von der des Teilschritts 321" abweicht. Die Symbolgröße kann beispielsweise als Indikator für die Dauer des Teilschritts verwendet werden und erleichtert es so einem Bediener, beim Erstellen eines Umstellprozesses und der entsprechenden Workflows, Rücksicht auf die zu erwartende Dauer der Teilschritte zu nehmen und so eine möglichst effektive Verteilung einzelner Teilschritte auf unterschiedliche Bediener zu ermöglichen.

Soll ein gänzlich neuer Umstellprozess erstellt werden, so kann vorgesehen sein, dass das Endgerät 301 einen entsprechenden Menüpunkt aufweist. Durch Wahl dieses Menüpunkts oder einer entsprechenden Eingabe kann dieses Menü ausgewählt werden. Da es für einen neuen Umstellprozess erforderlich ist, entsprechende Teilschritte zu definieren, deren Reihenfolge nicht per se festgelegt ist, kann eine Auswahl von Teilschritten 351 vorgesehen sein, die eine Gesamtheit oder eine Untermenge von häufig verwendeten Teilschritten 354 umfasst. Da eine Auswahl aller möglichen Teilschritte, die für einen beliebigen Umstellprozess nötig sein könnten, unzweckmäßig sein kann, können die Teilschritte in unterschiedlichen Gruppierungen geordnet sein oder nur eine Auswahl häufig verwendeter Teilschritte angezeigt werden. Ebenso kann es erforderlich sein, wenn ein neuer Umstellprozess 351 erstellt werden soll, neue Teilschritte zu erzeugen. Der entsprechende Menüeintrag 353 erlaubt durch Aktivierung oder entsprechende Eingabe an das Endgerät 301 komplett neue Teilschritte zu generieren. Ein entsprechendes, vorzugsweise interaktives, Menü kann einen Bediener dann durch das Erstellen der Teilschritte leiten und ihn beispielsweise auffordern, entsprechende digitale Bilder oder Videos aufzunehmen und zusätzliche Informationen einzugeben.

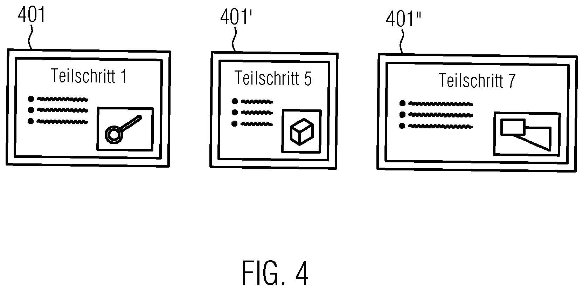

Fig. 4 zeigt eine schematische Darstellung von Endgeräten 401, 401' und 401", die für verschiedene Benutzer vorbereitet sind. Durch die Zuteilung entsprechender Workflows werden für die verschiedenen Bediener unterschiedliche Teilschritte angezeigt. Eine entsprechende Vernetzung der Endgeräte 401, 401' und 401" beispielsweise mit Hilfe eines drahtlosen Netzwerks kann die Abstimmung der Arbeiten erleichtern. So kann eine interaktive Anzeige in den einzelnen Endgeräten 401, 401' und 401" dazu dienen, anzuzeigen, ob einer der Bediener einen Teilschritt bereits beendet hat, der für die Durchführung eines weiteren Teilschritts eines anderen Bedieners erforderlich ist. Beispielsweise kann eine entsprechende Bedingung so lange sie nicht erfüllt ist, in Rot angezeigt werden und sobald ein Bediener die entsprechenden Teilschritte erfüllt, kann sie Grün hinterlegt werden um den anderen Bedienern zu signalisieren, dass dieser Teilschritt beendet ist. Bevorzugt ist, dass die einzelnen Workflows für die unterschiedlichen Bediener der Endgeräte 401, 401' und 401" nur die Teilschritte anzeigen, die von dem entsprechenden Bediener durchgeführt werden müssen, um keine Überschneidung bzw. Unstimmigkeiten durch Bediener, die auch Teilschritte durchführen, die nicht für sie vorgesehen waren, zu vermeiden. Um jedoch jedem Bediener einen Überblick über den ganzen Umstellprozess zu ermöglichen und so individuelle Absprachen zu erleichtern, kann eine Zusammenfassung aller Teilschritte in Form von Stichpunkten oder ähnlichem gegeben sein. Sollte es für einzelne Teilschritte notwendig sein, dass die Arbeiten von mehreren Bedienern gleichzeitig durchgeführt werden, können, um eine möglichst effektive Durchführung zu gewährleisten, entsprechende Aufgaben zeitgleich auf den entsprechenden Endgeräten 401, 401', 401" angezeigt werden

## Patentansprüche

1. Verfahren zur Unterstützung von Bedien- und/oder Umstellprozessen für eine Maschine, das die folgenden Schritte umfasst:
Anlegen (100) einer Beschreibung des Bedien- und/oder Umstellprozesses, der eine Vielzahl von Teilschritten umfasst;
Bearbeiten (220) des Bedien- oder Umstellprozesses und/oder einzelner Teilschritte;
Speichern (190) des Bedien- und/oder Umstellprozesses und/oder der bearbeiteten Teilschritte;
wobei das Bearbeiten (220) umfasst: Erzeugen (221) von Workflows, die eine Reihe von Teilschritten umfassen, für Benutzer;
Verteilen des Bedien- und/oder Umstellprozesses und/oder einzelner Workflows und/oder einzelner Teilschritte auf Endgeräte (301);
Definition des Ortes des Bedien- und/oder Umstellprozesses und/oder des Teilschritts mit Hilfe von an der umzustellenden Maschine vorgesehener Codierung (223);
wobei die Teilschritte auf verschiedenen Endgeräten (401, 401', 402") verschieden sind; wobei der Bedien- und/oder Umstellprozess der Maschine einem Bediener mittels der Teilschritte erklärt wird, sodass der Bediener den Umstellprozess oder einen oder mehrere Teilschritte des Bedien- und/oder Umstellprozesses gezielt durchführen kann;
wobei der Bedien- und/oder Umstellprozess zumindest eine Umstellung einer Blasformmaschine, umfassend eine Umstellung von Blasformen der Blasformmaschine von einer ersten Größe auf eine zweite Größe, umfasst.

2. Verfahren nach Anspruch 1, **dadurch gekennzeichnet, dass** wenigstens einer der Schritte Anlegen (100), Bearbeiten (220), Speichern (190) mit Hilfe eines mobilen Geräts (301) durchgeführt wird.

3. Verfahren nach Anspruch 1 oder 2, **dadurch gekennzeichnet, dass** aus einer Reihe von Presets, die bereits voreingestellten Bedien- und/oder Umstellprozessen und/oder voreingestellten Teilschritten entsprechen oder diese umfassen und vorzugsweise in einer zentralen Datenbank gespeichert sind, ein oder mehrere Bedien- und/oder Umstellprozesse und/oder Teilschritte ausgewählt wird.

4. Verfahren nach einem der Ansprüche 1 bis 3, **dadurch gekennzeichnet, dass** der Schritt Anlegen (100) weiterhin umfasst:
Erstellen eines digitalen Bildes und/oder Videos des Ortes (211) an dem der Bedien- und/oder Umstellprozess und/oder der Teilschritt durchgeführt wird;
Erstellen eines digitalen Bildes und/oder Videos des Handlungsablaufs (212) des Bedien- und/oder Umstellprozesses und/oder des Teilschritts;
Erstellen einer Erstellanleitung des Bedien- und/oder Umstellprozess und/oder des Teilschritts;
Speicherung von Zusatzdaten (213), beispielsweise aktuelle und vorherige verwendete Produktsorten;
Abspeichern der Beschreibung des Bedien- oder Umstellungsprozesses in einer Datenbank (214).

5. Vorrichtung zur Unterstützung von Bedien- und/oder Umstellprozessen für eine Maschine, wobei die Vorrichtung wenigstens eine Eingabeeinrichtung umfasst, mit der eine Beschreibung des Bedien- und/oder Umstellprozesses, der eine Vielzahl von Teilschritten umfasst, erstellt werden kann und mit der der Bedien- oder Umstellprozesses und/oder einzelne Teilschritte bearbeitet werden können;
eine Datenspeichervorrichtung umfasst, in der der Bedien- und/oder Umstellprozess und/oder die Teilschritte gespeichert werden ; wobei die wenigstens eine Eingabeeinrichtung und die Datenspeichervorrichtung zur Bearbeitung des Bedien- oder Umstellprozesses und/oder einzelner Teilschritte weiterhin eingerichtet sind um:
Workflows, die eine Reihe von Teilschritten umfassen, für Benutzer zu erzeugen (221);
einzelne Workflows und/oder einzelne Teilschritte und/oder den Bedien- und/oder Umstellprozesses auf Endgeräte (301) zu verteilen;
eine Definition des Ortes des Bedien- und/oder Umstellprozesses und/oder des Teilschritts mit Hilfe von an der umzustellenden Maschine vorgesehener Codierung zu erzeugen (223);
wobei die Teilschritte auf verschiedenen Endgeräten (401, 401', 402") verschieden sind; wobei der Bedien- und/oder Umstellprozess der Maschine einem Bediener mittels der Teilschritte erklärt wird, sodass der Bediener den Umstellprozess oder einen oder mehrere Teilschritte des Bedien- und/oder Umstellprozesses gezielt durchführen kann;
wobei der Bedien- und/oder Umstellprozess zumindest eine Umstellung einer Blasformmaschine, umfassend eine Umstellung von Blasformen der Blasformmaschine von einer ersten Größe auf eine zweite Größe, umfasst.

6. Vorrichtung nach Anspruch 5, **dadurch gekennzeichnet, dass** die Eingabeeinrichtung ein mobiles Gerät (301) umfasst oder ein mobiles Gerät (301) ist.

7. Vorrichtung nach Anspruch 5 oder 6, **dadurch gekennzeichnet, dass** ein Preset-Speicher vorgesehen ist, der mit der Datenspeichervorrichtung identisch sein kann, in dem Preset-Einstellungen für Bedien- und/oder Umstellprozesse und/oder Teilschritte gespeichert sind.

8. Vorrichtung nach einem der Ansprüche 5 bis 7, wobei die Eingabeeinrichtung dazu eingerichtet ist,
digitale Bilder und/oder Videos zu erzeugen;
eine Erstellanleitung des Umstellprozess und/oder des Teilschritts zu erzeugen;
und wobei die Eingabeeinrichtung und die Datenspeichervorrichtung dazu eingerichtet sind, Zusatzdaten, beispielsweise aktuelle und vorherige verwendete Produktsorten zu speichern (213).

## Claims

1. A method for supporting operating and/or changeover processes for a machine, in particular product type changeovers in the beverage processing industry, for a machine, the method comprising the following steps:
creating (100) a description of the operating and/or changeover process which can comprise a plurality of sub-steps;
processing (220) the operating and/or changeover process and/or individual sub-steps;
storing (190) the operating and/or changeover process and/or the processed sub-steps;
wherein processing (220) comprises:
generating (221) workflows that comprise a number of sub-steps for users;
distributing the operating and/or changeover process and/or individual workflows and/or individual sub-steps to end devices (301);
defining the location of the operating and/or changeover process and/or the sub-step with the help of coding (223) provided on the machine to be changed over;
wherein the sub-steps are different on different end devices (401, 401', 401");
wherein the operating and/or changeover process of the machine is explained to an operator by the sub-steps, such that the operator is enabled to perform the changeover process or one or several sub-steps of the operating and/or changeover process;
wherein the operating and/or changeover processes comprise at least retrofitting of a blow molding machine, comprising a changeover of blow molds of the blow molding machine from a first size to a second size.

2. The method according to claim 1, **characterized in that** at least one of the steps creating (100), processing (220), storing (190) is carried out with the help of a mobile device (301).

3. The method according to claim 1 or 2, **characterized in that** one or plural operating and/or changeover processes and/or sub-steps are selected among a number of presets which conform to already preset operating and/or changeover processes and/or preset sub-steps or comprise the same and are preferably stored in a central database.

4. The method according to any one of claims 1 to 3, **characterized in that** the step creating (100) further comprises:
creating a digital image and/or video of the location (211) at which the operating and/or changeover process and/or the sub-step is performed;
creating a digital image and/or video of the course of action (212) of the operating and/or changeover process and/or the sub-step;
creating a creation instruction of the operating and/or changeover process and/or of the sub-step;
storing additional data (213), for instance current and previously used product types;
storing the description of the operating and/or changeover process in a database (214).

5. A device for supporting operating and/or changeover processes, in particular product type changeovers in the beverage processing industry, for a machine, the device comprising at least an input means for creating a description of the operating and/or changeover process which includes multiple sub-steps, and for processing the operating and/or changeover process and/or individual sub-steps;
a data storage device in which the operating and/or changeover process and/or the sub-steps are stored;
wherein the at least one input means and the data storage device for processing the operating and/or changeover process and/or individual sub-steps are further adapted to:
generate workflows comprising a number of sub-steps for users (221);
distribute individual workflows and/or individual sub-steps and/or the operating and changeover process to end devices (301);
generate a definition of the location of the operating and/or changeover process and/or the sub-step with the help of coding provided on the machine to be changed over (223);
wherein the sub-steps are different on different end devices (401, 401', 401");
wherein the operating and/or changeover process of the machine can be explained to an operator by the sub-steps, such that the operator is enabled to perform the changeover process or one or several sub-steps of the operating and/or changeover process;
wherein the operating and/or changeover processes comprise at least retrofitting of a blow molding machine, comprising a changeover of blow molds of the blow molding machine from a first size to a second size.

6. The device according to claim 5, **characterized in that** the input means includes a mobile device (301) or is a mobile device (301).

7. The device according to claim 5 or 6, **characterized in that** a preset store is provided which may be identical with the data storage device, in which preset settings for operating and/or changeover processes and/or sub-steps are stored.

8. The device according to any one of claims 5 to 7, **characterized in that** the input means is adapted
to produce digital images and/or videos;
to generate a creation instruction of the changeover process and/or of the sub-step;
and wherein the input means and the data storage device are adapted to store additional data, for instance current and previously used product types (213).

## Revendications

1. Procédé d'aide à des processus de commande et/ou de reconversion destinés à une machine, qui comprend les étapes suivantes :
l'élaboration (100) d'un traitement du processus de commande et/ou de reconversion, qui comprend une pluralité d'étapes partielles ;
le traitement (220) du processus de commande ou de reconversion et/ou d'étapes partielles individuelles ;
la mémorisation (190) du processus de commande et/ou de reconversion et/ou des étapes partielles traitées ;
procédé
d'après lequel le traitement (220) comprend :
la production (221) de flux de travaux appelés workflows, qui comprennent une série d'étapes partielles, pour l'utilisateur ;
la répartition du processus de commande et/ou de reconversion et/ou de workflows individuels et/ou d'étapes partielles individuelles, sur différents appareils terminaux (301) ;
la définition du lieu du processus de commande et/ou du processus de reconversion et/ou de l'étape partielle à l'aide de codages (223) prévus sur la machine à reconvertir ;
procédé
d'après lequel les étapes partielles sur des appareils terminaux différents (401, 401', 402") sont différentes ;
d'après lequel le processus de commande et/ou de reconversion de la machine est expliqué à un utilisateur au moyen des étapes partielles, de manière à ce que l'utilisateur soit en mesure d'effectuer de manière ciblée le processus de reconversion ou bien une ou plusieurs étapes partielles du processus de commande et/ou de reconversion ; et
d'après lequel le processus de commande et/ou de reconversion comprend au moins une reconversion d'une machine de moulage par soufflage comprenant la reconversion de moules de soufflage de la machine de moulage par soufflage, d'une première grandeur à une deuxième grandeur.

2. Procédé selon la revendication 1, **caractérisé en ce qu'**au moins une des étapes d'élaboration (100), de traitement (220), de mémorisation (190), est exécutée à l'aide d'un appareil mobile (301).

3. Procédé selon la revendication 1 ou la revendication 2, **caractérisé en ce qu'**à partir d'une série de présélections, qui correspondent à ou comprennent des processus de commande et/ou de reconversion préréglés et/ou des étapes partielles préréglées, et qui sont de préférence mémorisées dans une banque de données centralisée, on sélectionne un ou plusieurs processus de commande et/ou de reconversion et/ou une ou plusieurs étapes partielles.

4. Procédé selon l'une des revendications 1 à 3, **caractérisé en ce que** l'étape de l'élaboration (100) comprend en outre :
l'établissement d'une image et/ou d'une vidéo digitale du lieu (211) où va être effectué le processus de commande et/ou de reconversion et/ou l'étape partielle ;
l'établissement d'une image et/ou d'une vidéo digitale du déroulement des actions (212) du processus de commande et/ou de reconversion et/ou de l'étape partielle ;
l'établissement d'instructions de réalisation du processus de commande et/ou de reconversion et/ou de l'étape partielle ;
la mémorisation de données additionnelles (213), par exemple des sortes de produits utilisées actuellement et précédemment ;
la mémorisation de la description du processus de commande et/ou de reconversion dans une banque de données (214).

5. Dispositif d'aide à des processus de commande et/ou de reconversion destinés à une machine, le dispositif
comprenant au moins une unité de saisie, à l'aide de laquelle il est possible d'établir une description du processus de commande et/ou de reconversion, qui comprend une pluralité d'étapes partielles, et à l'aide de laquelle il est possible d'assurer le traitement du processus de commande et/ou de reconversion et/ou d'étapes partielles ;
et comprenant un dispositif de mémorisation de données, dans lequel sont mémorisés le processus de commande et/ou de reconversion et/ou les étapes partielles ; dispositif
dans lequel ladite au moins une unité de saisie et le dispositif de mémorisation de données, sont par ailleurs, en vue du traitement du processus de commande et/ou de reconversion et/ou d'étapes partielles, configurés pour :
produire (221) des flux de travaux appelés workflows, qui comprennent une série d'étapes partielles, pour l'utilisateur ;
répartir des workflows individuels et/ou des étapes partielles individuelles et/ou le processus de commande et/ou de reconversion sur des appareils terminaux (301) ;
produire (223) une définition du lieu du processus de commande et/ou de reconversion et/ou de l'étape partielle, à l'aide de codages prévu sur la machine à reconvertir ;
dispositif
dans lequel les étapes partielles sur des appareils terminaux différents (401, 401', 402") sont différentes ;
dans lequel le processus de commande et/ou de reconversion de la machine est expliqué à un utilisateur à l'aide des étapes partielles, de manière à ce que l'utilisateur soit en mesure d'effectuer de manière ciblée le processus de reconversion ou bien une ou plusieurs étapes partielles du processus de commande et/ou de reconversion ; et
dans lequel le processus de commande et/ou de reconversion comprend au moins une reconversion d'une machine de moulage par soufflage comprenant la reconversion de moules de soufflage de la machine de moulage par soufflage, d'une première grandeur à une deuxième grandeur.

6. Dispositif selon la revendication 5, **caractérisé en ce que** l'unité de saisie comprend un appareil mobile (301) ou est un appareil mobile (301).

7. Dispositif selon la revendication 5 ou la revendication 6, **caractérisé en ce qu'**il est prévu une mémoire de présélections, qui peut être identique avec le dispositif de mémorisation de données, et dans laquelle sont mémorisées des présélections préréglées pour des processus de commande et/ou de reconversion et/ou des étapes partielles.

8. Dispositif selon l'une des revendications 5 à 7, dans lequel l'unité de saisie est configurée pour
produire des images et/ou des vidéos digitales ;
produire des instructions de réalisation du processus de commande et/ou de reconversion et/ou de l'étape partielle ;
et dans lequel l'unité de saisie et le dispositif de mémorisation de données sont configurés pour mémoriser (213) des données additionnelles, comme par exemple des sortes de produits utilisées actuellement et précédemment.
